(19) Europäisches Patentamt
European Patent Office
Office européen des brevets

(11) EP 3 068 083 B1

(12) **EUROPEAN PATENT SPECIFICATION**

(45) Date of publication and mention
of the grant of the patent:
**30.05.2018 Bulletin 2018/22**

(21) Application number: **14859402.1**

(22) Date of filing: **09.06.2014**

(51) Int Cl.:
*H04L 12/721* *(2013.01)* *H04L 12/755* *(2013.01)*
*H04L 12/751* *(2013.01)* *H04L 12/759* *(2013.01)*
*H04L 12/733* *(2013.01)*

(86) International application number:
**PCT/CN2014/079535**

(87) International publication number:
**WO 2015/067042 (14.05.2015 Gazette 2015/19)**

(54) **METHOD AND APPARATUS FOR REMAINING LIFETIME AGING**

VERFAHREN UND VORRICHTUNG FÜR RESTLEBENSDAUERALTERUNG

PROCÉDÉ ET APPAREIL DE VIEILLISSEMENT D'UNE DURÉE DE VIE RESTANTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.11.2013 CN 201310549520**

(43) Date of publication of application:
**14.09.2016 Bulletin 2016/37**

(73) Proprietor: **ZTE Corporation
Shenzhen, Guangdong 518057 (CN)**

(72) Inventors:
• **WU, Qiang
Shenzhen
Guangdong 518057 (CN)**
• **ZHOU, Guangteng
Shenzhen
Guangdong 518057 (CN)**

(74) Representative: **Novagraaf Technologies
Bâtiment O2
2, rue Sarah Bernhardt
CS90017
92665 Asnières-sur-Seine Cedex (FR)**

(56) References cited:
CN-A- 1 121 195      CN-A- 1 960 330
CN-A- 101 485 160    CN-A- 103 095 590
US-A- 5 086 428      US-A1- 2006 045 024
US-A1- 2013 083 802

• **YUANPING ZOU ET AL: "Dynamic Load
Balancing Based on Roulette Wheel Selection",
2006 INTERNATIONAL CONFERENCE ON
COMMUNICATIONS, CIRCUITS AND SYSTEMS :
GUILIN, GUANGXI, CHINA, 25 - 28 JUNE 2006,
IEEE SERVICE CENTER, PISCATAWAY, NJ, 1
June 2006 (2006-06-01), pages 1732-1734,
XP031010755, ISBN: 978-0-7803-9584-8**
• **KSHITIJ BHARDWAJ ET AL: "Towards graceful
aging degradation in NoCs through an adaptive
routing algorithm", DESIGN AUTOMATION
CONFERENCE (DAC), 2012 49TH
ACM/EDAC/IEEE, IEEE, 3 June 2012 (2012-06-03),
pages 382-391, XP032204615, DOI:
10.1145/2228360.2228429 ISBN:
978-1-4503-1199-1**

**Description**

**Technical Field**

The present disclosure relates to the field of communications, particularly to a method and device for aging remaining lifetime.

**Background**

An Intermediate System to Intermediate System (ISIS) routing protocol is a dynamic, link state-based Interior Gateway Protocol (IGP). After a neighbour is established by the ISIS protocol through interaction and negotiation using a hello message, a Link State Protocol (LSP) data packet is generated by each Intermediate System (IS) to describe link state information of the present IS, and the generated LSP data packet is transmitted into a network. LSP data packets transmitted by all ISs on network topology will be also stored to form a Link State Database (LSDB). An optimal routing to a destination address is calculated in the ISIS routing protocol by a Shortest Path First (SPF) algorithm by using the LSDB.

An LSP data packet contains a field of remaining lifetime, wherein the field is used for tracking a timer of lifetime of the LSP data packet, so as to eliminate old information in the LSDB. When an IS generates a new LSP data packet, the remaining time is set to an upper limit which is 1200 by default, may be also modified into a larger or smaller value through configuration, and is maximally 65535. After the LSP data packet is generated, the remaining lifetime is reduced as time passes. When refreshing time (smaller than the remaining lifetime) of the LSP data packet expires, the LSP data packet will be generated again. Otherwise, the remaining lifetime of the LSP data packet will be reduced to 0 finally. At the moment, all routers having a copy of the LSP data packet will be removed from the LSDB after the remaining lifetime is zero, so as to eliminate the LSP data packet from the network.

An IS stores, in the LSDB, LSP data packets that are received on the network and transmitted by all other ISs, and executes a function of gradually aging the LSP data packets. Currently, most device manufacturers generally scan each LSP data packet one by one and second by second in the LSDB, and reduce the remaining lifetime to one in each second to implement aging finally.

However, there is a considerable increase in the LSP data packets as the network scale expands, and the above task of aging the LSP data packets will consume many computer resources, which results in excessively long aging time of a production device, or the LSP aging time to be inaccurate. When the aging time of the LSP data packets is controlled by a threshold in each second, all LSP data packets can not be aged on time because there are too many LSP data packets, thus resulting in the error aging time of the LSP data packets.

Therefore, there is a problem of low efficiency in aging the remaining lifetime and the aging of remaining lifetime being inaccurate as the number of data entities increases, due to application of a processing method of scanning the field of the remaining lifetime in the related art.

Document D1 (US 2013/083802 A1) provides related technical solutions, however, the above mentioned problem still remains unsolved.

**Summary**

The present disclosure provides a method and device for aging remaining lifetime, according to the independent claims so as to at least solve the problem of low efficiency in aging the remaining lifetime and the aging of remaining lifetime being inaccurate as the number of data entities increases, due to application of a processing method of scanning the field of the remaining lifetime in the related art.

Through the present disclosure, the remaining lifetime of a data entity is acquired; the remaining lifetime is inserted into a time roulette; and the remaining lifetime is aged with rotation of the time roulette, thus solving the problem of low efficiency in aging the remaining lifetime and the aging of remaining lifetime being inaccurate as the number of data entities increases, due to application of a processing method of scanning the field of the remaining lifetime in the related art, and further improving the efficiency and accuracy in aging remaining lifetime.

**Brief Description of the Drawings**

The accompanying drawings described herein are used for providing further understanding to the present disclosure and form a part of the present application. The schematic embodiments of the present disclosure and the description thereof are used for explaining the present disclosure, instead of forming improper limitation to the present disclosure. In the accompanying drawings:

Fig. 1 is a flowchart of a method for aging remaining lifetime according to an embodiment of the present disclosure;
Fig. 2 is a structural block diagram of a device for aging remaining lifetime according to an embodiment of the present disclosure;
Fig. 3 is an example structural block diagram of a device for aging the remaining lifetime according to an embodiment of the present disclosure;
Fig. 4 is an example structural block diagram of the inserting component 24 in the device for aging the remaining lifetime according to an embodiment of the present disclosure;
Fig. 5 is the first example structural block diagram of the aging component 26 in the device for aging the remaining lifetime according to an embodiment of the present disclosure;
Fig. 6 is the second example structural block diagram of the aging component 26 in the device for aging the remaining lifetime according to an embodiment of the present disclosure;
Fig. 7 is a schematic diagram of a time roulette according to an example embodiment of the present disclosure;
Fig. 8 is a schematic diagram of a scale design of each second of a time roulette according to an example embodiment of the present disclosure;
Fig. 9 is a schematic diagram of movements among scales in a roulette according to an example embodiment of the present disclosure;
Fig. 10 is a schematic diagram of movements of linked lists among roulettes according to an example embodiment of the present disclosure;
Fig. 11 is the first schematic diagram of insertion of an LSP data packet according to an example embodiment of the present disclosure;
Fig. 12 is the second schematic diagram of insertion of an LSP data packet according to an example embodiment of the present disclosure; and
Fig. 13 is a flowchart of aging an LSP data packet according to an example embodiment of the present disclosure.

## Detailed Description of the Embodiments

The present disclosure will be expounded hereinafter with reference to the accompanying drawings and in combination with the embodiments. It needs to be noted that the embodiments in the present application and the characteristics in the embodiments may be combined with each other if there is no conflict.

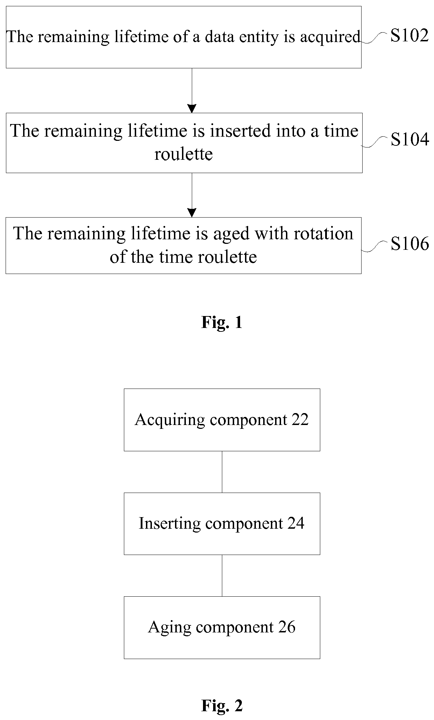

A method for aging remaining lifetime is provided in the present embodiment. Fig. 1 is a flowchart of a method for aging remaining lifetime according to an embodiment of the present disclosure. As shown in Fig. 1, the flow includes the following steps.

Step 102: The remaining lifetime of a data entity is acquired;

Step 104: The remaining lifetime is inserted into a time roulette;

Step 106: The remaining lifetime is aged with rotation of the time roulette.

Through the above steps, the remaining lifetime is aged with the rotation of the time roulette, thus solving the problem of low efficiency in aging the remaining lifetime and the aging of remaining lifetime being inaccurate as the number of data entities increases, due to application of a processing method of scanning the field of the remaining lifetime in the related art, thereby improving the efficiency and accuracy in aging the remaining lifetime.

In order to age the lifetime more accurately, a deviation generated when the remaining lifetime is inserted into the time roulette is considered, and the remaining lifetime inserted into the time roulette may be corrected before the remaining lifetime is aged with the rotation of the time roulette. In other words, the remaining lifetime is supplemented and corrected or adjusted correspondingly so that the inserted remaining lifetime is more true and accurate.

The remaining lifetime may be inserted into the time roulette by applying a plurality of processing methods. For example, time roulettes with different second levels may be created, and then, according to a highest digit of the remaining lifetime, the remaining lifetime is inserted into a time roulette with a second level corresponding to the highest digit. In other words, the remaining lifetime is aged accordingly from a high digit to a low digit.

In different aging conditions, different processing to age the remaining lifetime with the rotation of the time roulette may be applied. For example, when the remaining lifetime corresponds to time roulettes with different second levels, that the remaining lifetime is aged with the rotation of the time roulette may apply the following processing: after the time roulette, into which the remaining lifetime is inserted, expires, whether the aged remaining lifetime is zero is judged; and when a judging result is that the aged remaining lifetime is not zero, the remaining lifetime is inserted into a time roulette of a lower second level to perform time aging process, wherein the lower second level is one level lower than a second level of the time roulette into which the remaining lifetime is inserted; and the judging process and the aging process are repeated in sequence until aged remaining lifetime is zero. For another example, when the remaining lifetime corresponds to a the time roulette with one same second level, that the remaining lifetime is aged with the rotation of the time roulette may apply the following processing: different roulette scales are created for the time roulette with the same second level, and the remaining lifetime is aged by moving the roulette scales from high to low.

A device for aging remaining time is further provided in the present embodiment. The device is applied to implementing the aforementioned embodiments and preferred embodiments, and what has been described will not be repeated. As used below, the term "component" may implement a combination of software and/or hardware having a preset function. Although the device described in the following embodiment is preferably implemented by software, implementation using hardware or a combination of software and hardware is also possible and conceivable.

Fig. 2 is a structural block diagram of a device for aging remaining lifetime according to an embodiment of the present disclosure. As shown in Fig. 2, the device includes an acquiring component 22, an inserting component 24 and an aging component 26. The device for remaining lifetime aging will be described below.

The acquiring component 22 is configured to acquire the remaining lifetime of a data entity; the inserting component 24 is connected to the acquiring component 22 and configured to insert the remaining lifetime into a time roulette; and the aging component 26 is connected to the inserting component 24 and configured to age the remaining lifetime with rotation of the time roulette.

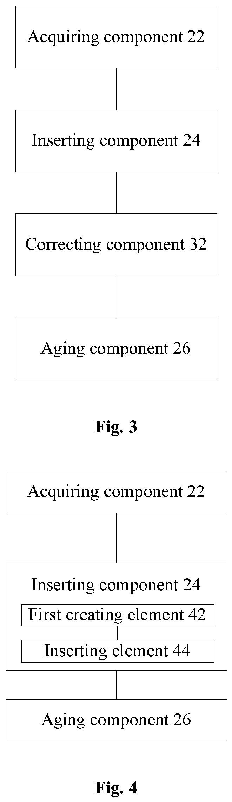

Fig. 3 is an example structural block diagram of the device for aging the remaining lifetime according to an embodiment of the present disclosure. As shown in Fig. 3, the device further includes a correcting component 32 besides all components as shown in Fig. 2. The example structure will be described below.

The correcting component 32 is connected to the inserting component 24 and the aging component 26 and configured to correct the remaining lifetime inserted into the time roulette.

Fig. 4 is the example structural block diagram of the inserting component 24 in the device for aging the remaining lifetime according to an embodiment of the present disclosure. As shown in Fig. 4, the inserting component 24 includes: a first creating element 42 and an inserting element 44. The inserting component 24 will be described below.

The first creating element 42 is configured to create time roulettes with different second levels; and the inserting element 44 is connected to the first creating element 42 and configured to insert, according to a highest digit of the remaining lifetime, the remaining lifetime into a time roulette with a second level corresponding to the highest digit.

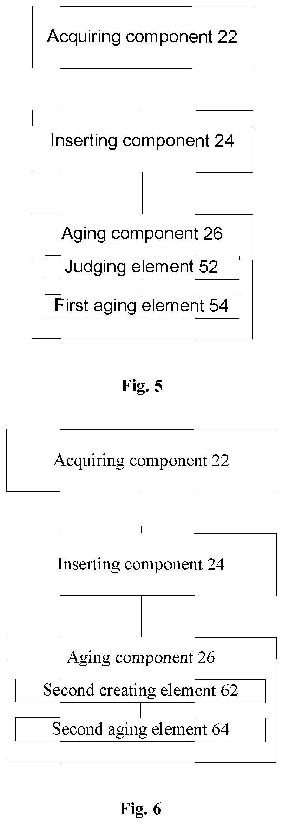

Fig. 5 is the first example structural block diagram of the aging component 26 in the device for aging the remaining lifetime according to an embodiment of the present disclosure. As shown in Fig. 5, the aging component 26 includes: a judging element 52 and a first aging element 54. The aging component 26 will be described below.

The judging element 52 is configured to judge, when the remaining lifetime corresponds to time roulettes with different second levels and after the time roulette, into which the remaining lifetime is inserted, expires, whether the aged remaining lifetime is zero; and the first aging element 54 is connected to the judging element 52 and configured to insert, when a judging result is that the aged remaining lifetime is not zero, the remaining lifetime into a time roulette of a lower second level to perform time aging process, wherein the lower second level is one level lower than a second level of the time roulette into which the remaining lifetime is inserted; and configured to repeat the judging process and the time aging process in sequence until aged remaining lifetime is zero.

Fig. 6 is the second example structural block diagram of the aging component 26 in the device for aging the remaining lifetime according to an embodiment of the present disclosure. As shown in Fig. 6, the aging component 26 includes a second creating element 62 and a second aging element 64. The aging component 26 will be described below.

The second creating element 62 is configured to create, when the remaining lifetime is in the time roulette of a same second level, different roulette scales for the time roulette with the same second level, and the second aging element 64 is connected to the second creating element 62 and configured to age the remaining lifetime by moving the roulette scales from high to low.

A method for processing time aging for a data entity is provided in the present embodiment, and aging processing of an LSP data packet in ISIS is illustrated as an example. It needs to be noted that a network device that runs an ISIS routing protocol ages an ISIS LSP data packet efficiently in the following example embodiment. The method is not limited to efficiently age the ISIS LSP data packet, and the method may be used for a large number of data entities of the same type that requires to be performed by a time aging function. Besides, the method may be also applicable to various ISIS-supported devices, including a router and a switch and so on.

The method of efficiently aging (consuming) the LSP data packet of the IS-IS protocol will be described below. The method roughly includes the following processing.

A time roulette mathematical model structure of "a ten thousand second level, a thousand second level, a hundred second level, a ten second level and a second level" is applied, and ten time roulette scales (bars) are established for the time roulette of each level, the LSP data packet is inserted into a time roulette scale (bar) corresponding to the roulette of a corresponding time second level by applying a roulette insertion algorithm, and an association relation between the LSP data packet and the time roulette scale (bar) is established. In an example embodiment, the remaining lifetime of the inserted LSP data packet may be further corrected by using a time compensation algorithm, and the LSP data packet is aged according to an inter-scale (bar) LSP moving algorithm in the roulette and an inter-roulette LSP moving algorithm.

It needs to be pointed out that the LSP data packet may include various data packets. For example, the LSP data packet may be an LSP data packet generated by a current IS, and may be also an LSP transmitted by a remote IS.

It needs to be further noted that, application of the method for efficiently aging (consuming) the LSP data packet of the IS-IS protocol is not limited to efficient aging of the ISIS LSP data packet, and the method of the time roulette mathematical model may be applied to a large number of data entities of the same type that requires to be performed by the time aging function.

According to the embodiments and example embodiments above, the method for aging the LSP data packet has the following advantages.

(1) Counting of the remaining lifetime of the LSP data packet is aged (consumed) by using a span-type segmented discontinuous method, thus reducing processing time, and avoiding the necessity of frequent processing. For example, a ten thousands digit second level roulette only rotates (performs processing) once in ten thousand seconds, and a thousands digit second level roulette only rotates (performs processing) once in thousand seconds.

(2) Processing is rapid and convenient. It is only necessary to associate the LSP data packet to the roulette by using a linked list (or other association techniques). When a timer of the roulette of each second level expires, it is necessary to integrally move the linked list of the LSP data packet with little operation in most cases.

(3) In the meanwhile, it is not difficult to display the remaining lifetime of the LSP data packet, and the simple calculation is required.

(4) In most cases, when the remaining lifetime of the LSP is aged to a certain residual value, a source IS that generates the LSP data packet will refresh the LSP data packet and generate an LSP data packet of a new version, thereby preventing the LSP data packet from being eliminated from an LSDB finally. Therefore, such roulettes of low levels as a ten second level roulette and a unit digit second level roulette, which consume much time, will not be used in most cases. Thus, the design of performing aging to a high digit first is more efficient.

The example embodiments of the present disclosure will be described below with reference to the accompanying drawings.

1. Design of time roulette mathematical model

(1) Overall design of time roulette

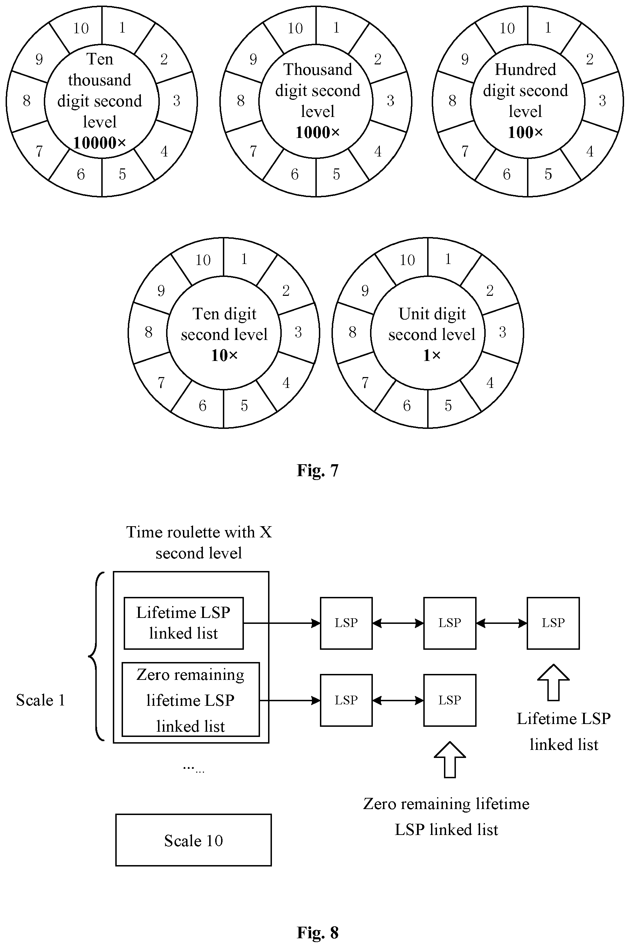

Fig. 7 is a schematic diagram of a time roulette according to an example embodiment of the present disclosure. As shown in Fig. 7, since the maximum value of an upper limit of the remaining lifetime of an LSP data packet in an LSDB is 65535 seconds, it is necessary to design the roulette structures to be five second levels.

Roulette structures of "a ten thousand second level, a thousand second level, a hundred second level, a ten second level and a second level" are defined in total, and structures of five second levels of a roulette is as follows, including:

a ten thousand second level roulette, for storing an LSP data packet whose lifetime is [10000,100000) seconds. The roulette of the second level rotates (performs processing) once every 10000 seconds, and after each rotation (processing), and counts down again from 10000 to 0, and rotates (performs processing) again;

a thousand second level roulette, for storing an LSP data packet whose lifetime is [1000,10000) seconds. The roulette of the second level rotates (performs processing) once every 1000 seconds, and after each rotation (processing), and counts down again from 1000 to 0, and rotates (performs processing) again;

a hundred second level roulette, for storing an LSP data packet whose lifetime is [100,1000) seconds. The roulette of the second level rotates (performs processing) once every 100 seconds, and after each rotation (processing), and counts down again from 100 to 0, and rotates (performs processing) again;

a ten second level roulette, for storing an LSP data packet whose lifetime is [10,100) seconds. The roulette of the second level rotates (performs processing) once every 10 seconds, and after each rotation (processing), and counts down again from 10 to 0, and rotates (performs processing) again;

a second level roulette: for storing an LSP data packet whose lifetime is [1,10) seconds. The roulette of the second level rotates (performs processing) once every 1 second, and after each rotation (processing), and counts down again from 1 to 0, and rotates (performs processing) again.

The rotation (processing) refers that: LSP data packets associated with roulette scales (bars) besides a roulette scale (bar) "1" on the roulette of such a second level are integrally moved, and an LSP data packet associated with the roulette scale (bar) "1" is relocated and inserted to an appropriate roulette, or processed by an aging processing function.

It needs to be noted that the LSP data packets are stored in roulette scales (bars) on the roulette in a segmented manner by using linked lists in the description. Of course, a roulette scale (bar) may be also associated with an LSP data packet by using other associating techniques.

Ten roulette scales (bars) are designed in the roulette of each level to associate LSP data packets having remaining lifetime of the numerical characteristics at the highest digit and zero remaining lifetime in the roulette of the level, so as to age (consume) the time of the highest digit. For example, the remaining lifetime of an LSP data packet is 62345. At the moment, the highest digit of the LSP data packet is the ten-thousands digit which is 6, thus the LSP data packet needs to be stored in a roulette scale (bar) "6" of ten-thousand second level roulette, so as to first age (consume) the time (60000 seconds) corresponds to the highest digit.

(2). Design of time roulette scales (bars)

Fig. 8 is a schematic diagram of a scale design of each second of a time roulette according to an example embodiment of the present disclosure. As shown in Fig. 8, scales (bars) of each time roulette are described as follows.

1) An LSP data packet of a scale (bar) of each time roulette is associated (stored) according to a bidirectional linked list.
2) Head pointers of two bidirectional linked lists of LSP data packets having remaining lifetime and LSP data packets having zero remaining lifetime are associated (stored) in the scales (bars) of each time roulette.
3) A node carried in the zero remaining lifetime linked list cannot be carried in the linked list of LSP data packets having remaining lifetime.

In this way, all LSP data packets that need to be stored are inserted in a segmented manner according to ranges of the remaining lifetime or zero remaining lifetime, so that an LSP data packet aging component scans the time roulette in a segmented manner.

2. Roulette LSP insertion algorithm

(1) Roulette insertion algorithm

The remaining lifetime of an LSP data packet may be aged (consumed) when the LSP data packet is inserted into a roulette. Therefore, the insertion into the roulette is the prerequisite and basis. As described above, description is provided by using a linked list to associate and store LSP data packets in roulette bars of each roulette in a segmented manner. Of course, roulette scales (bars) and LSP data packets may be also associated by applying other associating techniques.

Insertion opportunity

1) When a new LSP data packet is received.
2) An LSP data packet is deleted from a roulette of a high second level and then moved to a roulette of a lower level, and it is necessary to insert the data packet into the second level roulette of the lower level.

When the LSP data packet is to be inserted into the time roulette, a digit to which the highest digit of the remaining lifetime of the LSP data packet belongs is checked first, and the LSP data packet is inserted into the roulette of a corresponding second level. For example, when there is a number on the ten-thousands digit of the remaining lifetime of the LSP data packet, the LSP data packet is inserted into a ten thousands digit second level roulette, and otherwise, the LSP data packet is inserted into a thousand digit second level roulette when there is a number on the thousand digit, and so on.

The insertion algorithm will be described below by illustrating an example of aging of the remaining lifetime of an LSP data packet, and similar processing (which will not be repeated here) may be performed for zero remaining lifetime.

For example, a new LSP data packet having remaining lifetime that is 12345 arrives. When the LSP data packet is received, it is found that the highest digit of the remaining lifetime is 1, then the LSP data packet is classified, and associated and stored in a time roulette scale (bar) whose number is "1" of a ten thousand digit second level roulette by using a linked list while the LSP data packet will not be associated and stored on other roulettes. When 10000 seconds of the ten thousand digit second level roulette expire, the LSP data packet is deleted from the ten thousand digit second level roulette. At the moment, it is necessary to delete the LSP data packet from the ten thousand digit second level roulette of a higher level and then move the LSP data packet to a roulette of a lower second level. At the moment, the remaining lifetime of the LSP data packet is 2345. The LSP data packet is re-classified, and it is found that the highest digit, i.e. the thousand digit is 2, thus the LSP data packet is stored in a time roulette scale (bar) whose number is "2" of a thousand digit roulette by using a linked list, while the thousand digit roulette rotates (performs processing) once in 1000 seconds. When 1000 seconds of a first timer expire, linked lists of all LSP data packets in the roulette bar whose number is "2" are integrally moved to the time roulette scale (bar) whose number is "1" of the thousand digit second level roulette, and the LSP data packet is also moved into the time roulette scale (bar) whose number is "1" of the thousand digit second level roulette. The remaining life time is changed into 1345. When a second period of 1000 seconds expires, the LSP data packet is relocated and stored in a hundred digit roulette to continue rotation, and so on, thus finally aging (consuming) the remaining life time of the LSP data packet.

(2). Time compensation algorithm

When an LSP data packet is inserted into a time roulette, it is necessary to compensate the remaining lifetime of the LSP data packet according to the following formula:

$$LSPcompensate = LSPremain/expire + \{Tcurrent\}pass$$

where LSPcompensate represents the compensation time of the LSP data packet, LSPremain/expire represents the remaining lifetime or zero lifetime of the LSP message, Tcurrent represents the current time when the LSP data packet is inserted, and {Tcurrent} pass represents the time that has been consumed currently on a roulette of a corresponding time level to which the LSP data packet is inserted.

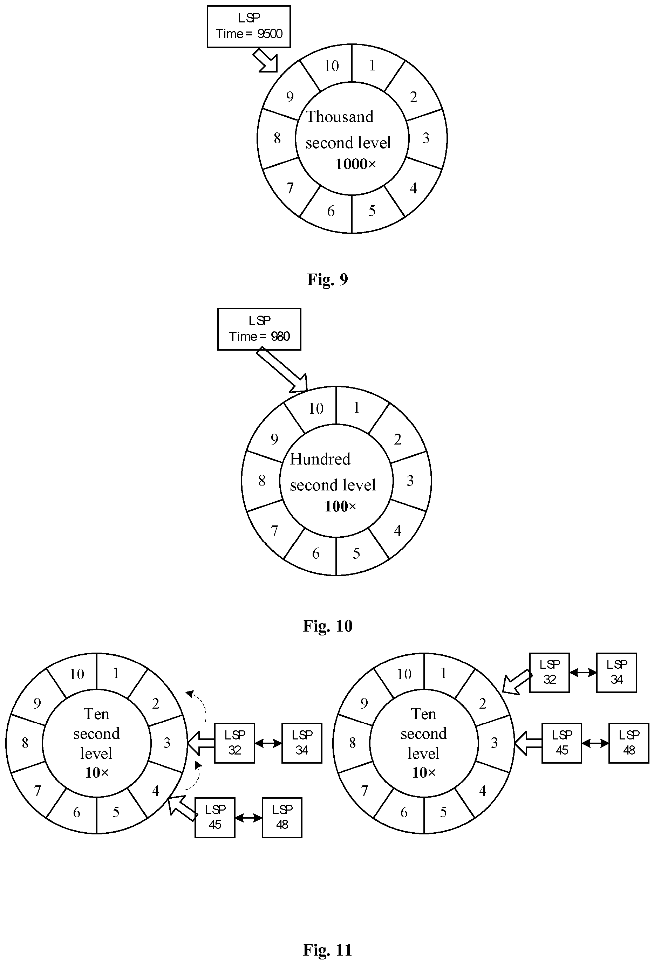

The reason that time compensation is required is because each LSP data packet arrives at different time. Fig. 9 is a schematic diagram of movements among scales in a roulette according to an example embodiment of the present disclosure. As shown in Fig. 9, the remaining lifetime of an LSP data packet is 9500 seconds, and the highest digit is the thousand digit which is 9, thus the LSP data packet should be classified into a roulette scale bar whose number is "9" of a thousand digit second level roulette. However, a timer of the thousand digit second level roulette has counted 200 seconds, then the thousand digit of the LSP data packet is removed from the time roulette scale (bar) whose number is "9" merely after 800 seconds to a time roulette scale (bar) whose number is "8"of the thousand digit roulette. At the moment, the system believes that the highest digit of the remaining lifetime, which is 8500, of the LSP data packet is changed into 8. At the moment, there is an error in the counting time of the LSP data packet, and 200 seconds are undercounted. At the moment, a compensation mechanism may be applied when the received LSP data packet is to be inserted. It is found that the remaining lifetime of the received LSP data packet is 9500 seconds, and the LSP data packet should belong to a roulette bar whose number is "9". However, the timer for counting the thousand digit has counted 200 seconds, then 200 seconds may be compensated. The remaining time of the LSP data packet is changed into the virtual remaining time which is 9700 seconds. When 800 seconds are counted on the basis of 200 seconds, the LSP data packet is removed from the time roulette scale (bar) whose number is "9"of the thousand digit second level roulette and moved into the time roulette scale (bar) whose number is "8" of the thousand digit second level roulette, thus turning back to the true remaining lifetime which is 9500-800=8700 seconds. At the moment, a recorded value of the remaining lifetime is the same as a true value, thus avoiding an aging deviation after the LSP data packet is inserted into the time roulette scale (bar) whose number is "9" of the thousand second level roulette. In this way, there is a virtual time when the LSP data packet is moved for the first time. When the true remaining lifetime needs to be acquired, it is further necessary to deduct the compensated time when the LSP data packet arrives. However, as long as the LSP data packet is moved once, the remaining lifetime is the true remaining lifetime. In other words, the compensated time is changed into zero.

A roulette scale (bar) whose number is "10" is designed in each roulette, which is also related to the time compensation algorithm, since time compensation is performed for a roulette of a level to which the LSP data packet should belong when the LSP data packet is inserted. Fig. 10 is a schematic diagram of movements of linked lists among roulettes according to an example embodiment of the present disclosure. As shown in Fig. 10, for example, the remaining lifetime of an LSP data packet is 980 seconds when the LSP data packet arrivals. At the moment, it is found that there is a value at the hundred digit, and the LSP data packet should belong to a roulette bar whose number is "9" of a hundred digit roulette. However, a timer of the hundred digit roulette bar has counted 30 seconds, and compensation is performed to the roulette of the hundred digit second level to which the LSP data packet should belong when the LSP data packet is inserted, thus 30 seconds need to be compensated, and the virtual remaining lifetime is 980+30=1010 seconds. At the moment, the LSP data packet is classified into a bar whose number is "10" of the hundred digit, and should not be classified into a roulette bar whose number is 1 of a thousand digit roulette bar, because the compensation is only performed to the roulette of a level to which the LSP data packet should join when the LSP data packet arrivals. When the LSP data packet is inserted into a roulette bar whose number is "1" of the thousand digit which is higher, compensation needs to be performed again, or a compensation error will be caused.

Compensation opportunity

1) When a new LSP data packet that is received needs to join a time roulette for aging.
2) An LSP data packet is deleted from a roulette of a high second level, and needs to be moved to a roulette of a low second level.
3. LSP remaining lifetime aging algorithm

The time of a high digit is aged (consumed) first for an LSP data packet by using the roulette design above, and a timer rotates clockwise according to a time roulette.

A ten thousand digit second level roulette rotates (performs processing) once when 10000 seconds expire. In order words, 10000 seconds are aged (consumed). At the moment, a linked list header of the processed LSP data packet on a roulette bar whose number is "10" of the ten thousand digit second level roulette is moved onto the roulette bar whose number is "9", and the linked list header of the processed LSP data packet on the roulette bar whose number is "9" is moved onto a roulette bar whose number is "8", ...... When the remaining lifetime of the LSP data packet on the roulette bar whose number is "1" of the ten thousand digit roulette is still not zero, the LSP data packet is relocated and moved to a thousands digit roulette, located and inserted into a roulette bar belonging to the thousand digit according to the remaining lifetime. When there is no value on the thousand digit, the LSP data packet is moved to a hundred digit roulette, and so on. When the remaining lifetime is zero, a specific deletion function is triggered to process the LSP data packet.

A thousand digit second level roulette rotates (performs processing) once when 1000 seconds expire. In order words, 1000 seconds are aged (consumed). At the moment, a linked list header of the processed LSP data packet on a roulette bar whose number is "10" of the thousand digit second level roulette is moved onto the roulette bar whose number is "9", and that on the roulette bar whose number is "9" is moved onto a roulette bar whose number is "8", ...... When the remaining lifetime of the LSP data packet on the roulette bar whose number is "1" of the thousand digit roulette is still not zero, the LSP data packet is relocated and moved to a hundred digit roulette, located and inserted into a roulette bar belonging to the hundred digit according to the remaining lifetime. When there is no value on the hundred digit, the LSP data packet is moved to a ten digit roulette, and so on. When the remaining lifetime is zero, a specific deletion function is triggered to process the LSP data packet.

The rest may be deduced by analogy.

Since an LSP is associated with a roulette bar by using a bidirectional linked list in the present embodiment, when the LSP is moved from a roulette bar to another roulette bar of a roulette of the same second level, it is merely necessary to move a header of the linked list of the LSP directly and it does not need to perform any processing on a single LSP, thus there is little operation and processing is rapid.

(1). Inter-scale LSP moving algorithm in roulette

When a timer of a time roulette of a level expires, LSPs in other higher time roulette scales (bars) in the roulette besides a time roulette scale whose number is "1" will be integrally moved to lower scales, so as to continue aging on the roulette of the second level. For example, when a timer of a ten thousand digit second level roulette expires after 10000 seconds, an LSP data packet stored in a time roulette scale (bar) whose number is "9" will be integrally moved to a time roulette scale (bar) whose number is "8" to continue aging on the ten thousand digit second level roulette. An LSP data packet stored in the time roulette scale (bar) whose number is "8" will be integrally moved to a time roulette scale (bar) whose number is "7" to continue aging on the ten thousand digit second level roulette, and so on.

Fig. 11 is the first schematic diagram of insertion of an LSP data packet according to an example embodiment of the present disclosure. Fig. 11 shows a process of aging (consuming) the remaining lifetime of an LSP data packet in a roulette of a ten second level. A timer expires and rotates (performs processing) every 10 seconds, which indicates that a period of 10 second of the remaining lifetime is aged (consumed). The left figure shows a location where a linked list of the LSP is saved before moving and the right figure shows a location where the linked list of the LSP is saved after moving in the ten second level roulette, wherein

1) the LSP data packet is first moved from a low scale, and an LSP linked list of a high scale is moved to a lower scale: linked list of the LSP data packet under scale "3" are integrally moved to scale "2", which indicates that these LSP data packets are stored on scale "3" of a ten digit second level roulette, 10 seconds are aged (consumed), the remaining lifetime is changed from a 30-second level to a 20-second level, and needs to continue aging on scale "2" of the ten digit second level roulette. Linked list of the LSP data packet under scale "4"are integrally moved to scale "3", which indicates that these LSP data packets are stored on scale "4" of the ten digit second level roulette, 10 seconds are aged (consumed), the remaining lifetime is changed from a 40-second level to a 30-second level, and needs to continue aging on scale "3" of the ten digit second level roulette.

2) When LSP data packets under scale "1" are moved, it is indicated that these LSP data packets are stored on scale "1" of the ten digit second level roulette, the final 10 seconds are aged, there is no remaining lifetime of a ten second level, and the LSP data packet needs to be moved to a roulette of a lower second level to continue aging. Please refer to the inter-roulette LSP moving algorithm described below for the moving principles.

(2). Inter-roulette LSP moving algorithm

When a timer of a time roulette of a level expires, and when the remaining lifetime of an LSP data packet stored on scale "1" is still not zero, the LSP data packet is relocated and moved to a roulette of a lower level, and the insertion algorithm described above is executed according to the remaining lifetime to insert the LSP data packet into a corresponding roulette bar of the roulette of the lower level. When the remaining lifetime is zero, a specific deletion function is triggered to process the LSP data packet.

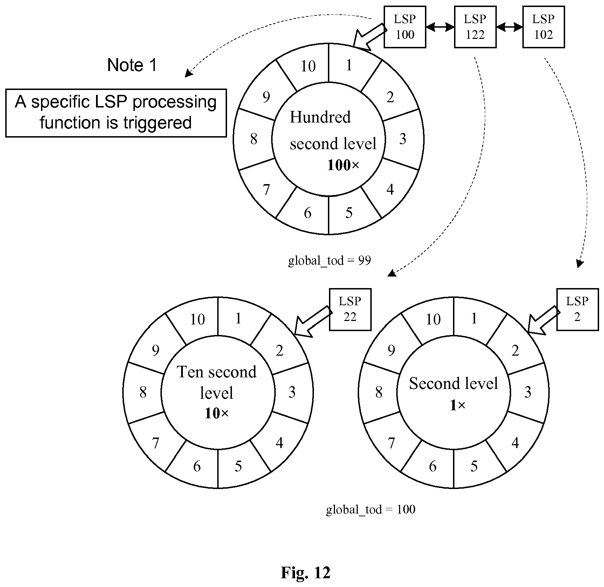

Fig. 12 is the second schematic diagram of insertion of an LSP data packet according to an example embodiment of the present disclosure. As shown in Fig. 12, when a 100-second timer of a hundred digit second level roulette expires, an LSP data packet stored in scale "1" is processed. After 100 seconds of an LSP data packet whose remaining lifetime is 100 seconds are aged (consumed) on scale "1" of the hundred digit second level roulette, the LSP data packet is deleted from the linked list, and the remaining lifetime is zero, and then a specific function of the LSP data packet is trigger to perform processing. After 100 seconds of an LSP data packet whose remaining lifetime is 122 seconds are aged (consumed) on scale "1" of the hundred digit second level roulette, there is still remaining lifetime which is 22, the highest digit is the ten digit, and the number on the ten digit is 2, thus the LSP data packet needs to be moved into a ten digit roulette of a lower level, and inserted into scale bar "2" of the ten digit second level roulette to continue aging in the roulette. After 100 seconds of an LSP data packet whose remaining lifetime is 102 seconds are aged (consumed) on scale "1" of the hundred digit second level roulette, there is still remaining lifetime which is 2, the highest digit is the unit digit, and the number on the unit digit is 2, thus the LSP data packet needs to be moved into a unit digit roulette of a lower level, and inserted into scale bar"2" of the unit digit second level roulette to continue aging in the roulette.

4. Example embodiment of aging of an LSP data packet

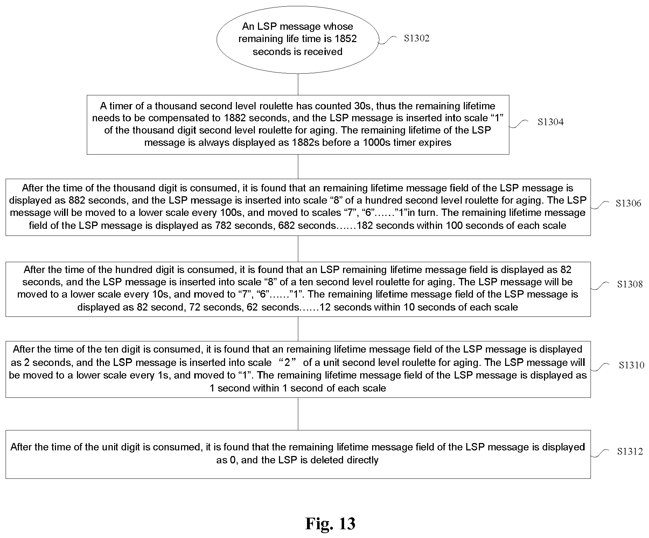

Fig. 13 is a flowchart of aging an LSP data packet according to an example embodiment of the present disclosure. As shown in Fig. 13, an example of a whole implementation process from insertion to deletion of an LSP is specifically described according to the algorithms above, taking an LSP message whose remaining lifetime is 1852 seconds for example:

Step 1302: An LSP message whose remaining life time is 1852 seconds is received, and it is found that there is a number "1" on a thousand digit thereof, and the LSP message should be inserted into scale "1" of a thousand digit second level roulette.

Step 1304: It is found during the insertion that a timer of the thousand second level roulette has counted 30 seconds, thus the remaining lifetime is set as 1882 seconds, and the LSP message is inserted into scale "1" of the thousand digit second level roulette for aging, and an LSP remaining lifetime message field is displayed as 1882 seconds from the current moment until 1000 seconds of the timer of the thousand second level roulette expire.

Step 1306: When the 1000 seconds of the timer of the thousand second level roulette expire, it is found that an remaining lifetime message field of the LSP message is displayed as 882 seconds, and the LSP message, which needs to be moved between roulettes, is deleted from the thousand second level roulette, and inserted into scale "8" of a hundred second level roulette. The remaining lifetime is displayed as 882 seconds within the 100 seconds. The LSP message needs to be moved among scales of the roulette every 100 seconds. The LSP message will be moved to a lower scale, and moved to "7", "6"...... "1" in turn. The remaining lifetime is reduced by 100 seconds progressively, and is displayed as 782 seconds, 682 seconds......182 seconds within 100 seconds on each scale.

Step 1308: After 800 seconds are consumed on the hundred second level roulette, it is found that an remaining lifetime message field of the LSP message is displayed as 82 seconds, and the LSP message, which needs to be moved between roulettes, is deleted from the hundred second level roulette, and inserted into scale "8" of a ten second level roulette. The remaining lifetime is displayed as 82 seconds within the 10 seconds. The LSP message needs to be moved among scales of the roulette every 10 seconds. The LSP will be moved to a lower scale, and moved to "7", "6"......"1" in turn. The remaining lifetime is reduced by 10 seconds progressively, and is displayed as 72 seconds, 62 seconds......12 seconds within 10 seconds of each scale.

Step 1310: After 80 seconds are consumed on the ten second level roulette, it is found that an remaining lifetime message field of the LSP message is displayed as 2 seconds, and the LSP message, which needs to be moved between roulettes, is deleted from the ten second level roulette, and inserted into scale "2" of a second level roulette. The remaining lifetime is displayed as 2 seconds within the 1 second. The LSP message needs to be moved among scales of the roulette every 1 second. The LSP will be moved to a lower scale, and moved to "1" in turn. The remaining lifetime is reduced by 1 second progressively, and is displayed as 1 second within 1 second on each scale.

Step 1312: After 2 seconds are consumed on the second level roulette, an remaining lifetime message field of the LSP message is displayed as 0, then aging of the LSP message ends, and the LSP message is deleted.

Obviously, those skilled in the art should understand that, each component or each step of the present disclosure may be implemented by a universal computing device. They may be concentrated on a single computing device or distributed on a network composed of a plurality of computing devices. Optionally, they may be implemented by program codes executable by a computing device so that they may be stored in a storing device and executed by the computing device, and in some cases, they the steps as illustrated or described may be executed by sequences different from those described herein, or they may be implemented by respectively fabricating them into each integrated circuit component, or by fabricating a plurality of components or steps of them into a single integrated circuit component. In this way, the present disclosure is not limited to any specific combination of software and hardware.

The above are only preferred embodiments of the present disclosure, and are not used for limiting the invention. For those skilled in the art, the present disclosure may have various alterations and variations. Any modification, equivalent replacement, improvement and so on made within the spirit and principle of the present disclosure should be included within the scope of protection of the present disclosure.

## Industrial Applicability

As described above, the problem the problem of low efficiency in aging the remaining lifetime and the aging of remaining lifetime being inaccurate as the number of data entities increases, due to application of a processing method of scanning the field of the remaining lifetime in the related art is solved, and further improving the efficiency and accuracy in aging remaining lifetime.

## Claims

1. A method for aging remaining lifetime of a link state protocol data packet, comprising:

   acquiring, by an ISIS-supported device, a remaining lifetime of a link state protocol data packet in an ISIS network (S102);
   inserting, by the ISIS-supported device, the remaining lifetime into a time roulette (S104); and
   aging, by the ISIS-supported device, the remaining lifetime with rotation of the time roulette (S106); **characterized by**
   inserting the remaining lifetime into the time roulette comprising: creating time roulettes with different second levels; and inserting, according to a highest digit of the remaining lifetime, the remaining lifetime into a time roulette with a second level corresponding to the highest digit;
   wherein when the remaining lifetime corresponds to time roulette with different second levels, aging the remaining lifetime with the rotation of the time roulette (S106) comprising: after the time roulette, into which the remaining lifetime is inserted, expires, judging whether the aged remaining lifetime is zero; and when a judging result is that the aged remaining lifetime is not zero, inserting the remaining lifetime into a time roulette of a lower second level to perform time aging process, wherein the lower second level is one level lower than a second level of the time roulette into which the remaining lifetime is inserted; and repeating the judging process and the time aging process in sequence until aged remaining lifetime is zero

2. The method as claimed in claim 1, before aging the remaining lifetime with the rotation of the time roulette (S106), further comprising:
   correcting the remaining lifetime inserted into the time roulette.

3. The method as claimed in claim 1, wherein when the remaining lifetime corresponds to a time roulette with one same second level, aging the remaining lifetime with the rotation of the time roulette (S106) comprises:

   creating different roulette scales for the time roulette with the same second level, and
   aging the remaining lifetime by moving the roulette scales from high to low.

**4.** A device for aging remaining lifetime aging remaining lifetime of a link state protocol data packet, comprising:

an acquiring component (22), configured to acquire a remaining lifetime of a link state protocol data packet in an ISIS network;

an inserting component (24), configured to insert the remaining lifetime into a time roulette; and

an aging component (26), configured to age the remaining lifetime with rotation of the time roulette; **characterized by** the inserting component (24) comprising :a first creating element (42), configured to create time roulettes with different second levels; and an inserting element (44), configured to insert, according to a highest digit of the remaining lifetime, the remaining lifetime into a time roulette with a second level corresponding to the highest digit;

wherein the aging component (26) comprising: a judging element (52) configured to judge, when the remaining lifetime corresponds to time roulettes with different second levels and after the time roulette, into which the remaining lifetime is inserted, expires, whether the aged remaining lifetime is zero; and a first aging element (54) configured to insert, when a judging result is that the aged remaining lifetime is not zero, the remaining lifetime into a time roulette of a lower second level to perform time aging process, wherein the lower second level is one level lower than a second level of the time roulette into which the remaining lifetime is inserted; and configured to repeat the judging process and the time aging process in sequence until aged remaining lifetime is zero.

**5.** The device as claimed in claim 4, further comprising:
a correcting component (32), configured to correct the remaining lifetime inserted into the time roulette.

**6.** The device as claimed in claim 4, wherein the aging component (26) comprises:

a second creating element (62), configured to create, when the remaining lifetime corresponds to a time roulette with one same second level, different roulette scales for the time roulette of the same second level, and

a second aging element (64), configured to age the remaining lifetime by moving the roulette scales from high to low.

**Patentansprüche**

**1.** Verfahren zum Altern von Restlebensdauer eines Link-State-Protokoll-Datenpakets, umfassend:

Erfassen, mittels einer ISIS-unterstützten Vorrichtung, einer Restlebensdauer eines Link-State-Protokoll-Datenpakets in einem ISIS-Netzwerk (S102);

Einfügen, mittels der ISIS-unterstützten Vorrichtung, der Restlebensdauer in ein Zeit-Roulette (S104); und

Altern, mittels der ISIS-unterstützten Vorrichtung, der Restlebensdauer mit Rotieren des Zeit-Roulettes (S106); **dadurch gekennzeichnet, dass**

das Einfügen der Restlebensdauer in das Zeit-Roulette umfasst: Erstellen von Zeit-Roulettes mit unterschiedlichen zweiten Ebenen; und Einfügen, entsprechend einer höchsten Stelle der Restlebensdauer, der Restlebensdauer in ein Zeit-Roulette mit einer zweiten Ebene, welche der höchsten Stelle entspricht;

wobei, wenn die Restlebensdauer Zeit-Roulette mit unterschiedlichen zweiten Ebenen entspricht, das Altern der Restlebensdauer mit dem Rotieren des Zeit-Roulettes (S106) umfasst: nachdem das Zeit-Roulette, in welches die Restlebensdauer eingefügt wird, abläuft, Bewerten, ob die gealterte Restlebensdauer Null ist; und wenn ein Bewertungsergebnis vorliegt, dass die gealterte Restlebensdauer nicht Null ist, Einfügen der Restlebensdauer in ein Zeit-Roulette mit einer niedrigeren zweiten Ebene, um einen Zeitalterungsprozess durchzuführen, wobei die niedrigere zweite Ebene eine Ebene niedriger ist als eine zweite Ebene des Zeit-Roulettes, in welches die Restlebensdauer eingefügt wird; und Wiederholen des Bewertungsprozesses und des Zeitalterungsprozesses nacheinander, bis die gealterte Restlebensdauer Null ist

**2.** Verfahren nach Anspruch 1, vor dem Altern der Restlebensdauer mit Rotieren des Zeit-Roulettes (S106), weiter umfassend:
Korrigieren der in das Zeit-Roulette eingefügten Restlebensdauer.

**3.** Verfahren nach Anspruch 1, wobei, wenn die Restlebensdauer einem Zeit-Roulette mit einer selben zweiten Ebene entspricht, das Altern der Restlebensdauer mit Rotieren des Zeit-Roulettes (S106) umfasst:

Erstellen von unterschiedlichen Roulette-Skalen für das Zeit-Roulette mit der selben zweiten Ebene, und Altern der Restlebensdauer mittels Bewegen der Roulette-Skalen von hoch auf niedrig.

4. Vorrichtung zum Altern von Restlebensdauer Altern von Restlebensdauer eines Link-State-Protokoll-Datenpakets, umfassend:

eine Erfassungskomponente (22), welche konfiguriert ist, eine Restlebensdauer eines Link-State-Protokoll-Datenpakets in einem ISIS-Netzwerk zu erfassen;
eine Einfügekomponente (24), welche konfiguriert ist, die Restlebensdauer in ein Zeit-Roulette einzufügen; und
eine Alterungskomponente (26), welche konfiguriert ist, die Restlebensdauer mit Rotation des Zeit-Roulettes zu altern;
**dadurch gekennzeichnet, dass**
die Einfügekomponente (24) umfasst: ein erstes Erstellungselement (42), welches konfiguriert ist, Zeit-Roulettes mit unterschiedlichen zweiten Ebenen zu erstellen; und ein Einfügeelement (44), welches konfiguriert ist, entsprechend einer höchsten Stelle der Restlebensdauer, die Restlebensdauer in ein Zeit-Roulette mit einer zweiten Ebene einzufügen, welche der höchsten Stelle entspricht;
wobei die Alterungskomponente (26) umfasst: ein Bewertungselement (52), welches konfiguriert ist, zu bewerten, wann die Restlebensdauer Zeit-Roulettes mit unterschiedlichen zweiten Ebenen entspricht, und nachdem das Zeit-Roulette, in welches die Restlebensdauer eingefügt wird, abläuft, ob die gealterte Lebensdauer Null ist; und ein erstes Alterungselement (54), welches konfiguriert ist, wenn ein Bewertungsergebnis vorliegt, dass die gealterte Restlebensdauer nicht Null ist, die Restlebensdauer in ein Zeit-Roulette mit einer niedrigeren zweiten Ebene einzufügen, um einen Zeitalterungsprozess durchzuführen, wobei die niedrigere zweite Ebene eine Ebene niedriger ist als eine zweite Ebene des Zeit-Roulettes, in welches die Restlebensdauer eingefügt wird; und konfiguriert ist, den Bewertungsprozess und den Zeitalterungsprozess nacheinander zu wiederholen, bis die gealterte Restlebensdauer Null ist.

5. Vorrichtung nach Anspruch 4, weiter umfassend:
eine Korrekturkomponente (32), welche konfiguriert ist, die in das Zeit-Roulette eingefügte Restlebensdauer zu korrigieren.

6. Vorrichtung nach Anspruch 4, wobei die Alterungskomponente (26) umfasst:

ein zweites Erstellungselement (62), welches konfiguriert ist, wenn die Restlebensdauer einem Zeit-Roulette mit einer selben zweiten Ebene entspricht, unterschiedliche Roulette-Skalen für das Zeit-Roulette der selben zweiten Ebene zu erstellen, und
ein zweites Alterungselement (64), welches konfiguriert ist, die Restlebensdauer mittels Bewegen der Roulette-Skalen von hoch auf niedrig zu altern.

**Revendications**

1. Procédé de vieillissement d'une durée de vie restante d'un paquet de données de protocole d'état de liaison, comprenant :

l'acquisition, par un dispositif pris en charge par ISIS, d'une durée de vie restante d'un paquet de données de protocole d'état de liaison dans un réseau ISIS (S102) ;
l'insertion, par le dispositif pris en charge par ISIS, de la durée de vie restante dans une roulette de temps (S104) ; et
le vieillissement, par le dispositif pris en charge par ISIS, de la durée de vie restante avec une rotation de la roulette de temps (S106) ;
**caractérisé en ce que**
l'insertion de la durée de vie restante dans la roulette de temps comprend : la création de roulettes de temps avec des deuxièmes niveaux différents ; et l'insertion, en fonction d'un chiffre le plus élevé de la durée de vie restante, de la durée de vie restante dans une roulette de temps avec un deuxième niveau correspondant au chiffre le plus élevé ;
dans lequel, quand la durée de vie restante correspond à une roulette de temps avec des deuxièmes niveaux différents, le vieillissement de la durée de vie restante avec la rotation de la roulette de temps (S106) comprend :
après que la roulette de temps, dans laquelle la durée de vie restante est insérée, expire, le fait de juger si la

12

durée de vie restante vieillie est zéro ; et quand un résultat de jugement est que la durée de vie restante vieillie n'est pas zéro, l'insertion de la durée de vie restante dans une roulette de temps d'un deuxième niveau inférieur pour effectuer un processus de vieillissement de temps, dans lequel le deuxième niveau inférieur est un niveau inférieur à un deuxième niveau de la roulette de temps dans laquelle la durée de vie restante est insérée ; et la répétition du processus de jugement et du processus de vieillissement de temps en séquence jusqu'à ce que la durée de vie restante vieillie soit zéro.

2. Procédé selon la revendication 1, comprenant en outre, avant le vieillissement de la durée de vie restante avec la rotation de la roulette de temps (S106) :
la correction de la durée de vie restante insérée dans la roulette de temps.

3. Procédé selon la revendication 1, dans lequel quand la durée de vie restante correspond à une roulette de temps avec un même deuxième niveau, le vieillissement de la durée de vie restante avec la rotation de la roulette de temps (S106) comprend :

la création de différentes échelles de roulette pour la roulette de temps avec le même deuxième niveau, et le vieillissement de la durée de vie restante en déplaçant les échelles de roulette du haut vers le bas.

4. Dispositif de vieillissement d'une durée de vie restante vieillissement d'une durée de vie restante d'un paquet de données de protocole d'état de liaison, comprenant :

un composant d'acquisition (22) configuré pour acquérir une durée de vie restante d'un paquet de données de protocole d'état de liaison dans un réseau ISIS ;
un composant d'insertion (24) configuré pour insérer la durée de vie restante dans une roulette de temps ; et
un composant de vieillissement (26) configuré pour vieillir la durée de vie restante avec une rotation de la roulette de temps ;
**caractérisé en ce que**
le composant d'insertion (24) comprend : un premier élément de création (42) configuré pour créer des roulettes de temps avec des deuxièmes niveaux différents ; et un élément d'insertion (44) configuré pour insérer, en fonction d'un chiffre le plus élevé de la durée de vie restante, la durée de vie restante dans une roulette de temps avec un deuxième niveau correspondant au chiffre le plus élevé ;
dans lequel le composant de vieillissement (26) comprend : un élément de jugement (52) configuré pour juger, quand la durée de vie restante correspond à des roulettes de temps avec des deuxièmes niveaux différents et après que la roulette de temps, dans laquelle la durée de vie restante est insérée, expire, si la durée de vie restante vieillie est zéro ; et un premier élément de vieillissement (54) configuré pour insérer, quand un résultat de jugement est que la durée de vie restante vieillie n'est pas zéro, la durée de vie restante dans une roulette de temps d'un deuxième niveau inférieur pour effectuer un processus de vieillissement de temps, dans lequel le deuxième niveau inférieur est un niveau inférieur à un deuxième niveau de la roulette de temps dans laquelle la durée de vie restante est insérée ; et configuré pour répéter le processus de jugement et le processus de vieillissement de temps en séquence jusqu'à ce que la durée de vie restante vieillie soit zéro.

5. Dispositif selon la revendication 4, comprenant en outre :
un composant de correction (32) configuré pour corriger la durée de vie restante insérée dans la roulette de temps.

6. Dispositif selon la revendication 4, dans lequel le composant de vieillissement (26) comprend :

un deuxième composant de création (62) configuré pour créer, quand la durée de vie restante correspond à une roulette de temps avec un même deuxième niveau, des différentes échelles de roulette pour la roulette de temps avec le même deuxième niveau, et
un deuxième élément de vieillissement (64) configuré pour vieillir la durée de vie restante en déplaçant les échelles de roulette du haut vers le bas.

The remaining lifetime of a data entity is acquired — S102

The remaining lifetime is inserted into a time roulette — S104

The remaining lifetime is aged with rotation of the time roulette — S106

**Fig. 1**

Acquiring component 22

Inserting component 24

Aging component 26

**Fig. 2**

Acquiring component 22

Inserting component 24

Correcting component 32

Aging component 26

**Fig. 3**

Acquiring component 22

Inserting component 24

First creating element 42

Inserting element 44

Aging component 26

**Fig. 4**

```
┌─────────────────────────────────┐
│                                 │
│     Acquiring component 22      │
│                                 │
└─────────────────────────────────┘
                 │
┌─────────────────────────────────┐
│                                 │
│     Inserting component 24      │
│                                 │
└─────────────────────────────────┘
                 │
┌─────────────────────────────────┐
│     Aging component 26          │
│  ┌───────────────────────────┐  │
│  │   Judging element 52      │  │
│  └───────────────────────────┘  │
│  ┌───────────────────────────┐  │
│  │  First aging element 54   │  │
│  └───────────────────────────┘  │
└─────────────────────────────────┘
```

**Fig. 5**

```
┌─────────────────────────────────┐
│                                 │
│     Acquiring component 22      │
│                                 │
└─────────────────────────────────┘
                 │
┌─────────────────────────────────┐
│                                 │
│     Inserting component 24      │
│                                 │
└─────────────────────────────────┘
                 │
┌─────────────────────────────────┐
│     Aging component 26          │
│  ┌───────────────────────────┐  │
│  │ Second creating element 62│  │
│  └───────────────────────────┘  │
│  ┌───────────────────────────┐  │
│  │ Second aging element 64   │  │
│  └───────────────────────────┘  │
└─────────────────────────────────┘
```

**Fig. 6**

**Fig. 7**

**Fig. 8**

**LSP**
Time = 9500

10 1
9 2
8 3
7 4
6 5

Thousand
second level
**1000×**

**Fig. 9**

**LSP**
Time = 980

10 1
9 2
8 3
7 4
6 5

Hundred
second level
**100×**

**Fig. 10**

10 1
9 2
8 3
7 4
6 5

Ten
second
level
**10×**

LSP 32 ↔ LSP 34

LSP 45 ↔ LSP 48

10 1
9 2
8 3
7 4
6 5

Ten
second
level
**10×**

LSP 32 ↔ LSP 34

LSP 45 ↔ LSP 48

**Fig. 11**

**Fig. 12**

An LSP message whose remaining life time is 1852 seconds is received

S1302

A timer of a thousand second level roulette has counted 30s, thus the remaining lifetime needs to be compensated to 1882 seconds, and the LSP message is inserted into scale "1" of the thousand digit second level roulette for aging. The remaining lifetime of the LSP message is always displayed as 1882s before a 1000s timer expires

S1304

After the time of the thousand digit is consumed, it is found that an remaining lifetime message field of the LSP message is displayed as 882 seconds, and the LSP message is inserted into scale "8" of a hundred second level roulette for aging. The LSP message will be moved to a lower scale every 100s, and moved to scales "7", "6"......"1"in turn. The remaining lifetime message field of the LSP message is displayed as 782 seconds, 682 seconds......182 seconds within 100 seconds of each scale

S1306

After the time of the hundred digit is consumed, it is found that an LSP remaining lifetime message field is displayed as 82 seconds, and the LSP message is inserted into scale "8" of a ten second level roulette for aging. The LSP message will be moved to a lower scale every 10s, and moved to "7", "6"......"1". The remaining lifetime message field of the LSP message is displayed as 82 second, 72 seconds, 62 seconds......12 seconds within 10 seconds of each scale

S1308

After the time of the ten digit is consumed, it is found that an remaining lifetime message field of the LSP message is displayed as 2 seconds, and the LSP message is inserted into scale "2" of a unit second level roulette for aging. The LSP message will be moved to a lower scale every 1s, and moved to "1". The remaining lifetime message field of the LSP message is displayed as 1 second within 1 second of each scale

S1310

After the time of the unit digit is consumed, it is found that the remaining lifetime message field of the LSP message is displayed as 0, and the LSP is deleted directly

S1312

**Fig. 13**

**EP 3 068 083 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2013083802 A1